Europäisches Patentamt

European Patent Office

Office européen des brevets

(11) Veröffentlichungsnummer: **0 294 604 B1**

# (12) EUROPÄISCHE PATENTSCHRIFT

(45) Veröffentlichungstag der Patentschrift: **11.03.92**

(21) Anmeldenummer: **88107505.5**

(22) Anmeldetag: **10.05.88**

(51) Int. Cl.⁵: **H05B 41/24**

(54) Schaltungsanordnung zum Betrieb einer Entladungslampe an einer Niedervolt-Gleichspannungsquelle.

(30) Priorität: **10.06.87 DE 3719356**

(43) Veröffentlichungstag der Anmeldung:
**14.12.88 Patentblatt 88/50**

(45) Bekanntmachung des Hinweises auf die
Patenterteilung:
**11.03.92 Patentblatt 92/11**

(84) Benannte Vertragsstaaten:
**DE FR GB IT**

(56) Entgegenhaltungen:
**DE-A- 3 031 322**
**US-A- 4 346 332**

(73) Patentinhaber: **Patent-Treuhand-Gesellschaft für elektrische Glühlampen mbH Hellabrunner Strasse 1 W-8000 München 90(DE)**

(72) Erfinder: **Arlt, Joachim Guardinistrasse 141 W-8000 München 70(DE)**

EP 0 294 604 B1

## Beschreibung

Die Erfindung betrifft eine Schaltungsanordnung zum hochfrequenten Betrieb einer Hochdruckentladungslampe an einer Niedervolt-Gleichspannungsquelle entsprechend dem Oberbegriff des Anspruchs 1.

Schaltungen dieser Art werden bisher insbesondere zum Betrieb von Glüh- und Niederdruckentladungslampen aus einer Notstrombatterie oder aus einer Gleichspannungsquelle, wie sie bei Bussen oder in der Eisenbahn vorliegt, verwendet. Neuerdings werden auch Untersuchungen angestellt, anstelle von Halogenglühlampen als Scheinwerferbeleuchtung in Kraftfahrzeugen Hochdruckentladungslampen zu verwenden. Diese stellen jedoch, damit sie sicher gezündet und betrieben werden können, sehr spezielle Anforderungen an eine Schaltungsanordnung.

Aus dem Telefunken-Taschenbuch für Röhren und Halbleiter (Ausgabe 1962, S. 413) ist eine Schaltungsanordnung zum Betreiben einer Last, wie sie oben aufgeführt ist, wiedergegeben. Die Schaltungsanordnung beinhaltet neben einer selbsterregten Gegentaktstufe einen Rückkopplungszweig mit zwei Serienresonanzschaltungen aus jeweils einem Kondensator und einer Drossel. Durch diese Serienresonanzzweig wird zwar eine konstante Arbeitsfrequenz in der Gegentaktstufe mit dem größten Steuerstrom bei der Resonanzfrequenz erzeugt, eine Anpassung des Steuerstroms an unterschiedliche Lastverhältnisse erfolgt jedoch nicht.

Hochdruckentladungslampen stellen eine ganz unterschiedliche Last dar, je nachdem, ob sie nun kalt oder warm gezündet werden sollen oder ob sie bereits gezündet sind und die Anlaufphase durchlaufen. Hinzu kommt, daß bei Verwendung von Hochdruckentladungslampen in Kfz-Scheinwerfern die Lampen innerhalb möglichst kurzer Zeit einen Mindestlichtstrom abgeben müssen. Außerdem fordert die Kfz-Industrie, daß bei Spannungsänderungen an der Batterie von ± 2 V und einer Lampenspannungstoleranz von ± 10 V die Lampenleistung sich um höchsten ± 3 W ändern darf.

Aufgabe der Erfindung ist es, eine Schaltungsanordnung zu schaffen, die durch ständige Anpassung an den jeweils benötigten Laststrom auch die schwierigen Bedingungen beim Betrieb einer Hochdruckentladungslampe an einer Niedervolt-Spannungsquelle erfüllt, wie die sichere und schnelle Zündung im heißen und kalten Zustand sowie in allen Abkühlphasen und ein schnelles Hochlaufen der Lampe in der Einbrennphase. Gleichzeitig sollten kleine Schwankungen der Betriebsspannung einen möglichst kleinen Einfluß auf die Lampenleistung haben. Die Schaltungsanordnung sollte aus wenigen Bauteilen bestehen und kostengünstig herzustellen sein.

Diese Aufgabe wird durch die kennzeichnenden Merkmale des ersten Anspruchs gelöst. Weitere vorteilhafte Ausgestaltungen der Schaltungsanordnung sind den Unteransprüchen zu entnehmen.

Durch die Schaltung der Primärwicklung des Ansteuertransformators in Reihe zur Sekundärwicklung des Leistungstransformators in den Ausgangskreis bestimmt der Laststrom auch die Steuerung der Gegentaktstufe. Er bestimmt mit seiner Größe auch die Größe der Ströme in den Sekundärwicklungen des Ansteuertransformators. Somit sind die Steuerströme der elektronischen Schaltelemente immer den Lastverhältnissen im Ausgangskreis angepaßt. Vorteilhaft bestehen die beiden elektronischen Schaltelemente aus schnellschaltenden Leistungstransistoren. Die Anpassung der Transistorsteuerung ist bei der erfindungsgemäßen Schaltungsanordnung so effektiv, daß sie sogar im kurzschlußähnlichen Resonanzbetrieb gewährleistet ist.

Die festgelegte Lampenspannungstoleranz von ± 10 V hat bei Verwendung einer Schaltungsanordnung, wie sie oben aufgeführt ist, nur eine sehr geringen Einfluß auf die Lampenleistung (< 2 %). Es ist daher für die Forderungen der Kfz-Industrie ausreichend, wenn die Lampenleistung durch eine entsprechende Lampenstromänderung konstant gehalten wird. Die Schaltungsanordnung bedingt eine Frequenzabhängigkeit der Impedanz des Lampenstromkreises, so daß der Lampenstrom mit der Frequenz verändert werden kann. Da andererseits die Brenneigenschaften von für den Betrieb in Kraftfahrzeugen geeigneten Hochdruckentladungslampen in einem weiten Bereich frequenzunabhängig sind, ist eine Lampenleistungsregelung auf diese Weise möglich. Die Frequenzänderung im Ausgangskreis wird bei der erfindungsgemäßen Schaltungsanordnung durch eine Vorrichtung erzielt, die eine Änderung der Zeitkonstanten der Steuerkreise des Gegentaktwandlers bewirkt. Die Zeitkonstanten werden vom Verhältnis der Blind- und Wirkwiderstände in den Steuerkreisen bestimmt.

Die Vorrichtung zur Änderung der Zeitkonstanten der Steuerkreise kann in einer bevorzugten Ausführung der Schaltungsanordnung aus einer veränderbaren Gleichspannungsquelle bestehen, die in die beiden Steuerkreise des Gegentaktwandlers geschaltet ist, und so den Wirkwiderstand der Steuerkreise verändert. In einer anderen vorteilhaften Schaltungsausführung kann die Vorrichtung zur Änderung der Zeitkonstanten auch aus einer Zweiweg-Gleichrichterschaltung mit einem Transistor bestehen, wobei die zugehörigen Transformatorwicklungen auf dem Kern des Ansteuertransformators angebracht sind. Hierdurch wird wiederum eine Veränderung des Wirkwiderstands in den Steuerkreisen erreicht. Die Vorrichtung kann in einer weiteren vorteilhaften Schaltungsausführung aber auch aus einem externen Elektromagneten mit einem veränderbaren Magnetfeld bestehen, durch welchen der Kern des Steuertransformators in seinen magnetischen und damit induktiven Eigenschaften verändert wird.

Bei einer besonders vorteilhaften Ausführung der Vorrichtung zur Änderung der Zeitkonstanten besteht diese aus einem npn-Transistor, dessen Emitter-Kollektor-Strecke parallel zum ohmschen Gesamtwiderstand der Steuerkreise geschaltet ist. Dieser Transistor wirkt wie ein steuerbarer Widerstand, der sich je nach seiner Basissteuerung mehr oder weniger dem Widerstand der Steuerkreise parallellegt und so eine wirksame Veränderung der Zeitkonstanten ermöglicht. Zusätzlich kann zur Stromverstärkung ein pnp-Transistor vorgesehen sein, der ähnlich einer Darlington-Schaltung mit dem npn-Transistor verbunden ist.

Der npn-Transistor kann gleichzeitig aber auch zur Bereitstellung eines erhöhten Anlaufstroms im Ausgangskreis für die Einbrennphase der Hochdruckentladungslampe verwendet werden. Dazu wird zur Basis-Kollektor-Strecke des npn-Transistors die Kollektor-Emitter-Strecke eines weiteren pnp-Transistors parallelgeschaltet. Durch die Verbindung der Basis dieses weiteren Transistors mit den Steuerkreisen des Gegentaktwandlers und - über eine Gleichrichtung mit Siebung - mit einem kapazitiven Spannungsteiler im Lastkreis ist eine stufenlose Regelung des erhöhten Lampenanlaufstroms möglich. Der erhöhte Lampenanlaufstrom wird gebraucht, um bei der Hochdruckentlandungslampe in einer möglichst kurzen Zeit eine Mindestlichtstromabgabe zu erzielen. Der erhöhte Strom liegt so lange an, bis die Lampe eine vorher festgelegte Brennspannung erreicht hat. Während der Überschreitung dieser Spannungsschwelle wird er stufenlos auf den Lampennennstrom heruntergeregelt.

Die Erfindung ist anhand der nachfolgenden Figuren näher veranschaulicht.

Figur 1
zeigt den genauen Schaltungsaufbau einer erfindungsgemäßen Schaltungsanordnung mit einer Transistorschaltung zur Stabilisierung der Lampenleistung bei Betriebsspannungsänderungen und einer Transistorschaltung zur Bereitstellung eines erhöhten Lampenanlaufstroms.

Figur 2
zeigt eine Schaltungsvariante für den Gegentaktwandler mit einer zusätzlichen veränderbaren Spannungsquelle in den Steuerkreisen.

Figuren 3a und 3b
zeigen Schaltungsvarianten für den Gegentaktwandler mit einem Zweiweggleichrichter und einer zusätzlichen Transformatorwicklung auf dem Kern des Ansteuertransformators.

Figur 4

zeigt eine Schaltungsvariante für den Ansteuertransformator des Gegentaktwandlers mit einem externen Elektromagneten mit veränderbarem Magnetfeld.

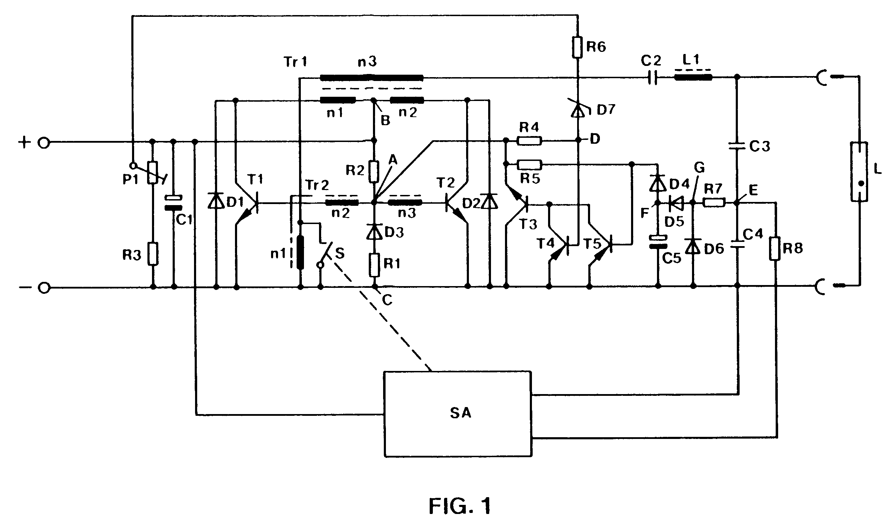

In Figur 1 ist eine Schaltungsanordnung zum hochfrequenten Betrieb einer Metallhalogenid-Hochdruckentladungslampe L an einer Niedervolt-Gleichspannungsquelle wiedergegeben. Die Schaltungsanordnung beinhaltet eine Transistorschaltung zur Stabilisierung der Lampenleistung bei Änderungen der Betriebsspannung und eine Transistorschaltung zur Schaffung eines erhöhten Lampenanlaufstroms.

Die Schaltungsanordnung weist eine Gegentaktstufe mit zwei schnellschaltenden Leistungstransistoren T1, T2 auf, deren Kollektoren über jeweils eine Primärwicklung n1, n2 eines Leistungstransformators Tr1 an einem Mittenabgriff B miteinander verbunden sind. Die Emitter der beiden Transistoren T1, T2 sind an den Minuspol der Gleichspannungsquelle gelegt. Die Basen der Transistoren sind über jeweils eine Sekundärwicklung n2, n3 des Steuertransformators Tr2 an einen Mittenabgriff A geführt, der einerseits über eine Diode D3 und einen in Reihe liegenden Widerstand R1 mit dem Minuspol und andererseits über einen Widerstand R2 mit dem Pluspol der Gleichspannungsquelle verbunden ist. Auch der Mittenabgriff B zwischen den Primärwicklungen n1, n2 des Leistungstransformators Tr1 ist mit dem Pulspol der Spannungsquelle verbunden. Parallel zu den Kollektor-Emitter-Strecken der beiden Transistoren T1, T2 sind Dioden D1, D2 in Sperrichtung geschaltet. Die beiden Steuerkreise der Gegentaktstufe beinhalten somit jeweils eine Sekundärwicklung n2 bzw. n3 des Ansteuertransformators Tr2, die Basis-Emitter-Strecke des jeweiligen Transistors T1, T2 sowie - beiden Steuerkreisen gemeinsam - die Diode D3 und den Widerstand R1. Parallel zum Gleichspannungseingang der Gegentaktstufe ist außerdem ein Glättungskondensator C1 geschaltet.

Die Schaltungsanordnung weist weiterhin einen Serienresonanzkreis auf, der aus einer Drossel L1 und einer Resonanzkapazität C3 besteht. Außerdem sind in Reihe zu den obigen Elementen der Gleichstromtrennkondensator C2, die Sekundärwicklung n3 des Leistungstransformators Tr1 und die Primärwicklung n1 des Steuertransformators Tr2 geschaltet, wobei die drei Wicklungen n1, n2, n3 des Steuertransformators Tr2 auf einem gemeinsamen Ringkern sitzen.

Bei Anschluß an die Gleichspannungsquelle fließt über den Widerstand R2 und die Wicklungen n2, n3 des Ansteuertransformators Tr2 der Schaltungsanordnung ein kleiner positiver Strom in die Basen der Schalttransistoren T1, T2 und bringt diese in den leitenden Zustand. Die Unsymmetrien der Transistoren T1, T2 verursachen kapazitive Verschiebungsströme im Resonanzkondensator C3 des Ausgangskreises. Diese Ströme fließen über die Primärwicklung n1 des Steuertransformators Tr2 und leiten über dessen Steuerwicklungen n2, n3 die wechselseitige Ansteuerung der beiden Transistoren T1, T2 ein.

Der Steuertransformator Tr2 ist vom Leistungstransformator Tr1 magnetisch getrennt, wodurch die frequenzbestimmenden Eigenschaften des Steuerteils in hohem Maß unbeeinflußt von den Dimensionen des Leistungstransformators Tr1 und den Stromverhältnissen im Ausgangskreis bleiben. Hierdurch wird die für den Betrieb von Hochdruckentladungslampen vorteilhafte Frequenzkonstanz erzielt.

Um einerseits den Steuerkreiswiderstand R1 möglichst niederohmig halten zu können und andererseits mit einem kleinen Strom über den Widerstand R2 am Mittenabgriff A die für das Selbstanschwingen notwendige Basisspannung aufbauen zu können, ist der Punkt A durch die Diode D3 vom Widerstand R1 getrennt.

Die Transistorschaltung zur Stabilisierung der Lampenleistung bei Betriebsspannungsänderungen beinhaltet einen npn-Transistor T3, dessen Emitter mit dem Mittenabgriff A und dessen Kollektor mit dem Minuspol der Gleichspannungsquelle verbunden ist. Parallel zum Betriebsspannungsanschluß der Schaltungsanordnung ist ein Widerstand R3 und mit ihm in Reihe ein Potentiometer P1 geschaltet, dessen Gleiter über einen Widerstand R6, eine Zenerdiode D7 und einen weiteren Widerstand R4 ebenfalls mit dem Emitter des Transistors T3 verbunden ist. Zwischen die Basis und den Kollektor des Transistors T3 ist die Kollektor-Emitter-Strecke eines pnp-Transistors T4 geschaltet, wobei der Emitter des Transistors T4 mit dem Minuspol der Schaltungsanordnung verbunden ist. Die Basis des Transistors T4 ist mit dem Verbindungspunkt D zwischen dem Widerstand R4 und der Zenerdiode D7 verbunden.

Die Steuerströme in den Steuerkreisen sind so gerichtet, daß am Mittenabgriff A gegenüber dem Massepunkt C, an dem die beiden Emitter der Schalttransistoren T1, T2 miteinander verbunden sind, eine negative Spannung entsteht. Vom Punkt A fließt über den Widerstand R4 ein negativer Strom in die Basis des pnp-Transistors T4, so daß dieser und der Transistor T3 leitend werden. Dadurch wird eine niedrige Frequenz und eine niedrige Resonanzkreisimpedanz und ein entsprechend großer Ausgangsstrom erzielt. Der Widerstand R4 ist dabei so zu wählen, daß bei der niedrigsten geforderten Betriebsspannung die Ausgangsleistung noch innerhalb der erlaubten Toleranzbreite liegt. Bei größer werdender Betriebsspannung wird ein Ansteigen des Ausgangsstromes verhindert, indem durch eine Zunahme der Frequenz die Ausgangsimpedanz erhöht wird. Dazu wird der negative Basistrom vom Mittenabgriff A über den Widerstand R4 durch einen von der Betriebsspannung abhängigen positiven Strom über den Widerstand R6 und die Zenerdiode D7 an den Verbindungspunkt D entsprechend verringert.

Ist der negative Strom über den Widerstand R4 genau kompensiert, so sind die beiden Transistoren T3, T4 gesperrt und die Frequenz hat ihren höchsten Wert erreicht. Die Zenerspannung der Diode D7 ist so zu wählen, daß ab der kleinsten auftretenden Betriebsspannung bereits ein Strom über den Widerstand R6 fließt. Mit Hilfe des Potentiometers P1 kann die Ausgangsleistung eingestellt werden.

Die Transistorschaltung zur Erhaltung eines erhöhten Anlaufstromes beinhaltet neben dem bereits in der Transistorschaltung zur Erzielung einer stabilen Lampenleistung aufgeführten Transistor T3 einen weiteren Transistor T5. Dieser ist - wie der Transistor T4 - mit seiner Kollektor-Emitter-Strecke parallel zur Kollektor-Basis-Strecke des Transistors T3 geschaltet. Die Basis des Transistors T5 ist über einen Widerstand R5 mit dem Mittenabgriff A verbunden. Außerdem ist die Basis der Transistors T5 über eine Diode D4, eine Diode D5 sowie einen Widerstand R7 mit einem Abgriff E zwischen dem Resonanzkondensator C3 und einem weiteren in Reihe dazu geschalteten Kondensator C4 verbunden. Zwischen der Diode D4 und der Diode D5 ist ein Verbindungspunkt F vorgesehen, der über einen Kondensator C5 an den Minuspol der Spannungsquelle gelegt ist. Weiterhin ist der Verbindungspunkt G zwischen der Diode D5 und dem Widerstand R7 über eine Diode D6 mit dem Minuspol der Spannungsquelle verschaltet.

Wie bei der Stabilisierung der Lampenleistung bei Änderungen der Betriebsspannung wird auch die Bereitstellung eines erhöhten Lampenanlaufstroms durch eine Änderung der Zeitkonstanten der Steuerkreise erreicht. Die Änderung der Zeitkonstanten wird auch hier über eine Widerstandsänderung in den Steuerkreisen durch den parallelgeschalteten Transistor T3 erzielt. Dazu wird über den Widerstand R5 vom Mittenabgriff A ein negativer Strom in die Basis des Transistors T5 geleitet, so daß dieser und damit auch der Transistor T3 in den leitenden Zustand übergeführt wird. Die Höhe des Anlaufstroms kann über den Widerstand R5 eingestellt werden.

Während der Bereitstellung eines erhöhten Anlaufstroms sollte die Regelung zur Stabilisierung der Lampenleistung außer Kraft gesetzt werden. Dies erfolgt bei der erfindungsgemäßen Schaltungsanordnung automatisch, da die erheblich stromstärkere Ansteuerung des Transistors T3 über den Transistor T5 die Steuerwirkung des Transistors T4 unterdrückt.

Zur stufenlosen Abschaltung des erhöhten Lampenanlaufstromes wird der negative Basisstrom am Transistor T5 durch einen von der Lampenspannung abhängigen positiven Strom überkompensiert, der von dem Spannungsteiler der beiden Kondensatoren C3, C4 geliefert wird. Die am kapazitiven Spannungsteiler entstehende Wechselspannung wird durch die Dioden D5, D6 gleichgerichtet, mittels des Kondensators C5 geglättet und gelangt über die Diode D4 als positiver Strom in den Basiskreis des Transistors T5. Die Diode D4 dient während des Lampenanlaufs zur Trennung dieser beiden Ströme, damit eindeutige Steuerverhältnisse vorliegen. Erreicht der positive Strom aus dem Spannungsteiler dieselbe Größe wie die negative Strom über den Widerstand R5, wird der Transistor T5 in den Sperrzustand gesteuert und damit der erhöhte Anlaufstrom abgeschaltet. Der Transistor T4 ist jetzt wieder für die Regelung der Lampenleistung frei.

Da die Schaltungsanordnung im Resonanzbetrieb, d.h. im Leerlauf oder bei fehlender oder defekter Lampe eine sehr große Leistungsaufnahme hat, die zu einer hohen Bauteilebelastung führt, kann eine Sicherheitsabschaltvorrichtung SA vorgesehen werden. Die Abschaltvorrichtung SA, die hier nicht näher aufgeführt werden soll, muß einen Abschaltkreis beinhalten, dem eine am Kondensator C4 abgegriffene Spannung über einen Widerstand R8 mit einer gewissen Zeitverzögerung zugeführt wird. Die Abschaltung erfolgt dann über einen Schalter S, der die Gegentaktstufe außer Funktion setzt.

In der nachfolgenden Tabelle sind die verwendeten Schaltungselemente für eine erfindungsgemäße Schaltungsanordnung zum Betrieb einer 35 W-Metallhalogenid-Hochdruckentladungslampe (Lampenspannung 100 V) an einer 12 V-Gleichspannungsquelle zusammengestellt:

| C1 : | 1000 $\mu$F |
|---|---|
| T1, T2 : | je 4 x BUV 26 in Parallelschaltung |
| Tr1 : | Ferritkern E 36, n1 = 8 Wd, n2 = 8 Wd, n3 = 118 Wd (Wd = Windungen) |
| Tr2 : | Ringkern, n1 = 13 Wd, n2 = 7 Wd, n3 = 7 Wd |
| R1 : | 2,2$\Omega$ |
| R2, R3, R5 : | 2,2 k$\Omega$ |
| D1, D2 : | RGP 30 |
| D3 : | BY 255 |
| C2 : | 33 nF |
| L1 : | 12 mH |
| C3 : | 1,4 nF |
| P1 : | 1 k$\Omega$ |
| R7 : | 1,8 k$\Omega$ |
| R4 : | 4,7 k$\Omega$ |
| C4 : | 33 nF |

| T3 : | BD 139 |
|---|---|
| T4, T5 : | BC 327 |
| R6 : | 18 k$\Omega$ |
| D7 : | ZPD 9.1 |
| D4 : | 3 x 1 N 4148 in Reihe |
| D5, D6 : | 1 N 4148 |
| C5 : | 4,7 $\mu$F |
| R8 : | 1 M$\Omega$ |

Im Resonanzfall entsteht am Kondensator C3 eine sinusförmige Wechselspannung von ca. 18 kV$_{ss}$ mit einer Frequenz von 45 kHz, die die Metallhalogenidhochdruckentladungslampe in einer Zeit kleiner 6 ms zum Zünden bringt. Im Resonanzkreis fließt hierbei, bedingt durch die Größe der Resonanzkapazität, ein effektiver Strom von ca. 2,5 A. Durch einen erhöhten Lampenanlaufstrom von ca. 2 A erreicht die 35 W-Metallhalogenid-Hochdruckentladungslampe in einer Zeit kleiner 5 Sekunden 60 % ihres maximalen Lichtstroms.

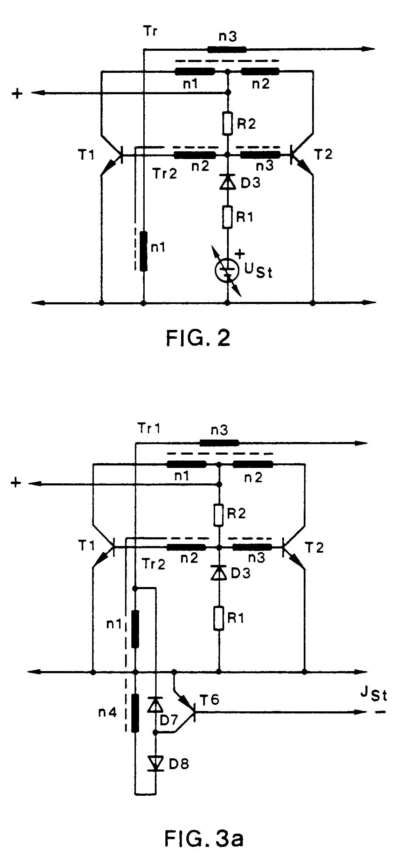

Figur 2 zeigt eine Variante der Vorrichtung zur Änderung der Zeitkonstanten in den Steuerkreisen des Gegentaktwandlers. Der Gegentaktwandler besitzt denselben Aufbau wie in Figur 1 gezeigt. Anstelle eines Transistors T3 parallel zum Widerstand der Steuerkreise ist hier in Reihe zur Diode D3 und dem Widerstand R1 eine veränderbare Spannungsquelle U$_{St}$ in die Steuerkreise eingefügt. Die anderen in der Figur 2 aufgeführten Schaltungselemente entsprechen den in der Figur 1 gezeigten Elementen. Die veränderbare Spannungsquelle U$_{St}$ wirkt mit der vom Steuerstrom erzeugten Spannung zusammen. Dadurch wird der Wirkwiderstand der Steuerkreise verändert und eine Variation der Zeitkonstanten herbeigeführt.

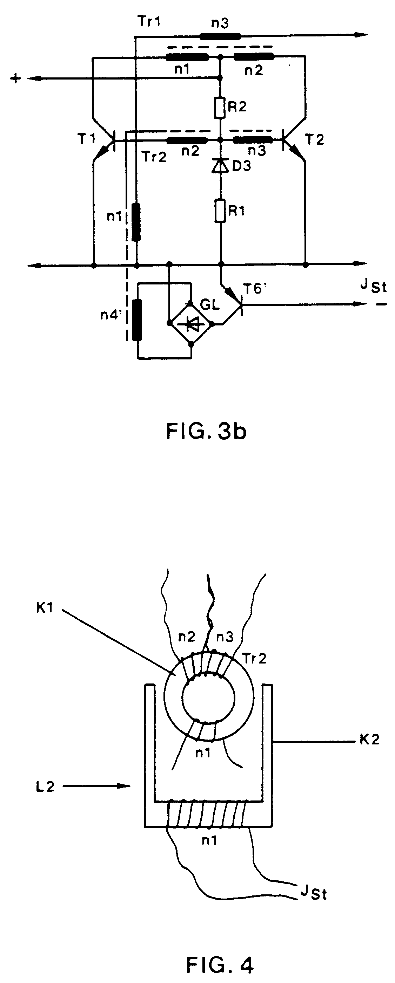

Figur 3a und 3b zeigen weitere Varianten der Vorrichtung zur Änderung der Zeitkonstanten in den Steuerkreisen. Mittels eines Zweiweggleichrichters und einer zusätzlichen Transformatorwicklung n4 bzw. n4$'$ auf dem Kern des Ansteuertransformators Tr2 wird eine zusätzliche Möglichkeit zur Frequenzänderung durch deren Belastung geschaffen. Der Zweiweggleichrichter kann dabei entweder als Mittelpunktschaltung (Figur 3a) mit Dioden D7, D8 oder als Brückenschaltung GL (Figur 3b) ausgeführt sein. Die Steuerung übernimmt der pnp-Transistor T6 bzw. T6$'$. Die weiteren in den Figuren 3a und 3b aufgeführten Schaltungselemente entsprechen den in Figur 1 gezeigten Elementen. Ist eine galvanische Trennung notwendig, so müssen anstelle der einen Wicklung n4 bzw. n4$'$ zwei zusätzliche Wicklungen am Kern angebracht werden. Im Fall der Mittelpunktschaltung (Figur 3a) müssen die Wicklungen n1 und n4 identisch sein.

Figur 4 zeigt eine vierte Variante der Vorrichtung zur Änderung der Zeitkonstanten in den Steuerkreisen. Die Vorrichtung besteht hierbei aus einem Elektromagneten L2 mit einem U-förmigen Kern K2 und einer Wicklung n1. Der Kern K2 umgibt den Ansteuertransformator Tr2 des Gegentaktwandlers, der sich, wie in der Beschreibung zu Figur 1 aufgeführt, aus dem Ringkern K1, der Primärwicklung n1 und den beiden Sekundärwicklungen n2 und n3 zusammensetzt. Das Feld des Elektromagneten L2 wirkt auf den Kern K1 und verändert durch Verdrängungseffekte dessen magnetische Eigenschaften, die zu einer Änderung des Blindwiderstands der Steuerkreise und damit zu einer Änderung der Zeitkonstanten führen.

**Patentansprüche**

1. Schaltungsanordnung zum hochfrequenten Betrieb einer Hochdruckentladungslampe (L) an einer Niedervolt-Gleichspannungsquelle, wobei die Schaltungsanordnung folgende Merkmale aufweist:
   - einen selbstanschwingenden Gegentaktwandler mit zwei elektronischen Schaltelementen und einem Ansteuertransformator (Tr2)
   - einen Serienresonanzkreis mit einer Induktivität (L1) in Reihe und einem Resonanzkondensator (C3) parallel zum Ausgangskreis und
   - einen Leistungstransformator (Tr1) für die Übertragung der hochfrequenten Schwingung des Gegentaktwandlers in den Serienresonanzkreis,

   dadurch gekennzeichnet, daß die Primärwicklung (n1) des Ansteuertransformators (Tr2) für den Gegentaktwandler in Reihe zur Sekundärwicklung (n3) des Leistungstransformators (Tr1) in den Serienresonanzkreis geschaltet ist und eine Vorrichtung zur Änderung der Zeitkonstanten der Steuerkreise des Gegentaktwandlers vorgesehen ist.

2. Schaltungsanordnung nach Anspruch 1, dadurch gekennzeichnet, daß parallel zum Gleichspannungseingang vor den Gegentaktwandler ein Glättungskondensator (C1) geschaltet ist.

3. Schaltungsanordnung nach Anspruch 1, dadurch gekennzeichnet, daß die beiden elektronischen Schaltelemente schnellschaltende npn-Leistungstransistoren (T1, T2) sind.

4. Schaltungsanordnung nach einem oder mehreren der Ansprüche 1 bis 3, dadurch gekennzeichnet, daß die Steuerelektroden der beiden Leistungstransistoren (T1, T2) über die Sekundärwicklungen (n2, n3) des Ansteuertransformators (Tr2) an einen gemeinsamen Mittenabgriff (A) geführt sind.

5. Schaltungsanordnung nach einem oder mehreren der Ansprüche 1 bis 4, dadurch gekennzeichnet, daß der Mittenabgriff (A) über eine Diode (D3) und einen Widerstand (R1) in Reihe mit dem Minuspol der Spannungsquelle verbunden ist.

6. Schaltungsanordnung nach einem oder mehreren der Ansprüche 1 bis 5, dadurch gekennzeichnet, daß die Vorrichtung zur Änderung der Zeitkonstanten der Steuerkreise des Gegentaktwandlers aus einem npn-Transistor (T3) besteht, dessen Emitter-Kollektor-Strecke parallel zu der Reihenschaltung aus Diode (D3) und Widerstand (R1) in den beiden Steuerkreisen geschaltet ist, wobei der Emitter des Transistors (T3) mit dem Mittenabgriff (A) verbunden ist.

7. Schaltungsanordnung nach einem oder mehreren der Ansprüche 1 bis 5, dadurch gekennzeichnet, daß die Vorrichtung zur Änderung der Zeitkonstanten der Steuerkreise des Gegentaktwandlers aus einer veränderbaren Gleichspannungsquelle ($U_{St}$) besteht, die in Reihe zu der Diode (D3) und dem Widerstand (R1) in die beiden Steuerkreise geschaltet ist und mit der vom Steuerstrom erzeugten Spannung zusammenwirkt.

8. Schaltungsanordnung nach Anspruch 1, dadurch gekennzeichnet, daß die Vorrichtung zur Änderung der Zeitkonstanten der Steuerkreise aus einer Zweiweg-Gleichrichterschaltung mit einem Transistor (T6, T6$'$) besteht, wobei die zugehörige zusätzliche Transformatorwicklung (n4, n4$'$) auf dem Kern des Ansteuertransformators (Tr2) angebracht ist.

9. Schaltungsanordnung nach Anspruch 1, dadurch gekennzeichnet, daß die Vorrichtung zur Änderung der Zeitkonstanten der Steuerkreise aus einem zusätzlichen externen Elektromagneten (L2) mit veränderbarem Magnetfeld besteht, durch das die magnetischen Eigenschaften des Ansteuertransformators (Tr2) geändert werden.

10. Schaltungsanordnung nach einem oder mehreren der Ansprüche 1 bis 6, dadurch gekennzeichnet, daß parallel zum Gleichstromeingang vor den Glättungskondensator (C1) eine Reihenschaltung eines Potentiometers (P1) und eines Widerstands (R3) geschaltet ist.

11. Schaltungsanordnung nach einem oder mehreren der Ansprüche 1 bis 10, dadurch gekennzeichnet, daß der Gleiter des Potentiometers (P1) über einen Widerstand (R6), eine Zenerdiode (D7) und einen weiteren Widerstand (R4) mit dem Emitter des npn-Transistors (T3) verbunden ist.

12. Schaltungsanordnung nach einem oder mehreren der Ansprüche 1 bis 11, dadurch gekennzeichnet, daß zur Stromverstärkung parallel zur Kollektor-Basis-Strecke des npn-Transistors (T3) ein pnp-Transistor (T4) mit seiner Kollektor-Emitter-Strecke geschaltet ist, wobei der Emitter mit dem Minuspol der Gleichspannungsquelle und die Basis mit dem Verbindungspunkt (D) zwischen der Zenerdiode (D7) und dem Widerstand (R4) verbunden ist.

13. Schaltungsanordnung nach einem oder mehreren der Ansprüche 1 bis 12, dadurch gekennzeichnet, daß zur Erzielung eines erhöhten Anlaufstromes im Ausgangskreis parallel zur Kollektor-Basis-Strecke des npn-Transistors (T3) ein weiterer pnp-Transistor (T5) mit seiner Kollektor-Emitter-Strecke geschaltet ist, wobei der Emitter mit dem Minuspol der Gleichspannungsquelle verbunden ist.

14. Schaltungsanordnung nach einem oder mehreren der Ansprüche 1 bis 13, dadurch gekennzeichnet, daß die Basis des weiteren pnp-Transistors (T5) über einen Widerstand (R5) mit dem Mittenabgriff (A) zwischen den Sekundärwicklungen (n2, n3) des Ansteuertransformators (Tr2) verbunden ist.

15. Schaltungsanordnung nach einem oder mehreren der Ansprüche 1 bis 14, dadurch gekennzeichnet, daß die Basis des weiteren pnp-Transistors (T5) über eine Gleichrichterschaltung mit Dioden (D4, D5, D6) und einen Glättungskondensator (C5) mit einem kapazitiven Spannungsteiler verbunden ist, der durch den Resonanzkondensator (C3) und einen weiteren dazu in Reihe geschalteten Kondensator (C4) gebildet wird.

## Claims

1. Circuit arrangement for the high-frequency operation of a high-pressure discharge lamp (L) from a low-voltage DC voltage source, the circuit arrangement exhibiting the following features:
   - a self-exciting push-pull converter with two electronic switching elements and a drive transformer (Tr2),
   - a series-resonant circuit comprising an inductance (L1) in series and a resonance capacitor (C3) in parallel with the output circuit, and
   - a power transformer (Tr1) for transferring the high-frequency oscillation of the push-pull converter into the series-resonant circuit, characterised in that the primary winding (n1) of the drive transformer (Tr2) for the push-pull converter is connected in series to the secondary winding (n3) of the power transformer (Tr1) into the series-resonant circuit and a device for changing the time constants of the control circuits of the push-pull converter is provided.

2. Circuit arrangement according to Claim 1, characterised in that a smoothing capacitor (C1) is connected in parallel with the direct-voltage input in front of the push-pull converter.

3. Circuit arrangement according to Claim 1, characterised in that the two electronic switching elements are fast-switching npn power transistors (T1, T2).

4. Circuit arrangement according to one or more of Claims 1 to 3, characterised in that the control electrodes of the two power transistors (T1, T2) are routed via the secondary windings (n2, n3) of the drive transformer (Tr2) to a common centre tap (A).

5. Circuit arrangement according to one or more of Claims 1 to 4, characterised in that the centre tap (A) is connected via a diode (D3) and a resistor (R1) in series to the negative terminal of the voltage source.

6. Circuit arrangement according to one or more of Claims 1 to 5, characterised in that the device for changing the time constants of the control circuits of the push-pull converter consists of an npn transistor (T3), the emitter-collector junction of which is connected in parallel to the series circuit of diode (D3) and resistor (R1) in the two control circuits, the emitter of the transistor (T3) being connected to the centre tap (A).

7. Circuit arrangement according to one or more of Claims 1 to 5, characterised in that the device for changing the time constants of the control circuits of the push-pull converter consists of a variable DC voltage source ($U_{st}$) which is connected in series to the diode (D3) and the resistor (R1) into the two control circuits, and operates in conjunction with the voltage generated by the control current.

8. Circuit arrangement according to Claim 1, characterised in that the device for changing the time constants of the control circuits consists of a two-way rectifier circuit comprising a transistor (T6, T6'), the associated additional transformer winding (n4, n4') being applied to the core of the drive transformer (Tr2).

9. Circuit arrangement according to Claim 1, characterised in that the device for changing the time constants of the control circuits consists of an additional external electromagnet (L2) having a variable magnetic field by means of which the magnetic properties of the drive transformer (Tr2) are changed.

10. Circuit arrangement according to one or more of Claims 1 to 6, characterised in that a series circuit of a potentiometer (P1) and of a resistor (R3) is connected in parallel to the direct-current input in front of the smoothing capacitor (C1).

11. Circuit arrangement according to one or more of Claims 1 to 10, characterised in that the slider of the potentiometer (P1) is connected to the emitter of the npn transistor (T3) via a resistor (R6), a zener diode (D7) and a further resistor (R4).

12. Circuit arrangement according to one or more of Claims 1 to 11, characterised in that the collector-emitter junction of a pnp transistor (T4) is connected in parallel to the collector-base junction of the npn transistor (T3) for the purpose of current amplification, the emitter being connected to the negative terminal of the DC voltage source and the base being connected to the tie point (D) between the zener diode (D7) and the resistor (R4).

13. Circuit arrangement according to one or more of Claims 1 to 12, characterised in that the collector-emitter junction of a further pnp transistor (T5) is connected in parallel to the collector-base junction of the npn transistor (T3) in order to achieve an increased starting current in the output circuit, the emitter being connected to the negative terminal of the DC voltage source.

14. Circuit arrangement according to one or more of Claims 1 to 13, characterised in that the base of the further pnp transistor (T5) is connected to the centre tap (A) between the secondary windings (n2, n3) of the drive transformer (Tr2) via a resistor (R5).

15. Circuit arrangement according to one or more of Claims 1 to 14, characterised in that the base of the further pnp transistor (T5) is connected via a rectifier circuit comprising diodes (D4, D5, D6) and a smoothing capacitor (C5) to a capacitive voltage divider which is formed by the resonance capacitor (C3) and a further capacitor (C4) connected in series thereto.

## Revendications

1. Montage pour faire fonctionner à haute fréquence une lampe à décharge haute pression (L) raccordée à une source de tension continue de faible voltage, le montage présentant les caractéristiques suivantes :
    - un convertisseur symétrique auto-oscillant comportant deux éléments de commutation électroniques et un transformateur de commande (Tr2),
    - un circuit résonnant série comportant une inductance (L1) en série avec le circuit de sortie et un condensateur de résonance (C3) en parallèle avec le circuit de sortie, et
    - un transformateur de puissance (Tr1) pour la transmission de l'oscillation à haute fréquence du transducteur symétrique dans le circuit résonnant série,
    caractérisé par le fait que l'enroulement primaire (n1) du transformateur de commande (Tr2) pour le transducteur électrique est branché en série avec l'enroulement secondaire (n3) du transformateur de puissance (Tr1) dans le circuit résonnant série et qu'il est prévu un dispositif pour modifier la constante de temps des circuits de commande du transducteur symétrique.

2. Montage selon la revendication 1, caractérisé en ce qu'un condensateur de lissage (C1) est branché en parallèle avec l'entrée de tension continue en amont du transmetteur symétrique.

3. Montage suivant la revendication 1, caractérisé par le fait que les deux éléments de commutation électronique sont des transistors de puissance npn à commutation rapide (T1,T2).

4. Montage suivant une ou plusieurs des revendications 1 à 3, caractérisé par le fait que les électrodes de commande des deux transistors de puissance (T1,T2) sont raccordées, par l'intermédiaire des enroulements secondaires (n2,n3) du transformateur de commande (Tr2), à une prise médiane commune (A).

**5.** Montage suivant une ou plusieurs des revendications 1 à 4, caractérisé par le fait que la prise médiane (A) est raccordée par une diode (D3) et une résistance (R1) en série au pôle positif de la source de tension.

**6.** Montage suivant une ou plusieurs des revendications 1 à 5, caractérisé par le fait que le dispositif servant à modifier la constante de temps du circuit de commande du transducteur symétrique est constitué par un transistor npn (T3), dont la voie émetteur-collecteur est parallèle au circuit série formé de la diode (T3) et de la résistance (R1) dans les deux circuits de commande, l'émetteur du transistor (T3) étant raccordé à la prise médiane (A).

**7.** Montage selon une ou plusieurs des revendications 1 à 5, caractérisé par le fait que le dispositif servant à modifier la constante de temps du circuit de commande du transducteur symétrique est constitué par une source de tension continue variable ($U_{Sc}$), qui est branchée en série avec la diode (D3) et la résistance (R1) dans les deux circuits de commande et coopère avec la tension produite par le courant de commande.

**8.** Montage suivant la revendication 1, caractérisé par le fait que le dispositif servant à modifier la constante de temps du circuit de commande est constitué par un circuit redresseur double alternance comportant un transistor (T6,T6'), l'enroulement supplémentaire associé (n4,n4') du transformateur étant disposé sur le noyau du transformateur de commande (Tr2).

**9.** Montage suivant la revendication 1, caractérisé par le fait que le dispositif servant à modifier la constante de temps des circuits de commande est constitué par un électroaimant extérieur supplémentaire (L2) possédant un champ magnétique variable, qui modifie les caractéristiques magnétiques du transformateur de commande (Tr2).

**10.** Montage suivant une ou plusieurs des revendications 1 à 6, caractérisé par le fait qu'un circuit série formé d'un potentiomètre (P1) et d'une résistance (R3) est branché en parallèle avec l'entrée du courant continu, en amont du condensateur de lissage (C1).

**11.** Montage suivant une ou plusieurs des revendications 1 à 10, caractérisé par le fait que le curseur du potentiomètre (P1) est raccordé par l'intermédiaire d'une résistance (R6), d'une diode Zener (D7) et d'une autre résistance (R4) à l'émetteur du transistor npn (T3).

**12.** Montage suivant une ou plusieurs des revendications 1 à 11, caractérisé par le fait que pour l'amplification de courant, en parallèle avec la voie collecteur-base du transistor npn (T3) est branchée la voie collecteur-émetteur d'un transistor pnp (T4), l'émetteur étant raccordé au pôle positif de la source de tension continue et la base au point de jonction (D) entre la diode Zener (D7) et la résistance (R4).

**13.** Montage suivant une ou plusieurs des revendications 1 à 12, caractérisé par le fait que pour l'obtention d'un courant de démarrage accru dans le circuit de sortie, en parallèle avec la voie collecteur-base du transistor npn (T3) est branchée, dans le circuit de sortie, la voie collecteur-émetteur d'un autre transistor pnp (T5), l'émetteur étant raccordé au pôle positif de la source de tension continue.

**14.** Montage suivant une ou plusieurs des revendications 1 à 13, caractérisé par le fait que la base de l'autre transistor pnp (T5) est raccordée par l'intermédiaire d'une résistance (R5) à la prise médiane (A) entre les enroulements secondaires (n2,n3) et le transformateur de commande (Tr2).

**15.** Montage suivant une ou plusieurs des revendications 1 à 14, caractérisé par le fait que la base de l'autre transistor pnp (T5) est raccordée par l'intermédiaire d'un circuit redresseur comportant des diodes (D4,D5,D6) et par l'intermédiaire d'un condensateur de lissage (C5) à un diviseur de tension capacitif, qui est formé par le condensateur de résonance (C3) et par un autre condensateur (C4) branché en série avec le précédent.

FIG. 1

FIG. 2

FIG. 3a

FIG. 3b

FIG. 4